# FASCICULE DE BREVET EUROPEEN

(11) **EP 1 161 512 B1**
(45) Date de publication et mention de la délivrance du brevet: **04.02.2004**
(21) Numéro de dépôt: 00906415.5
(22) Date de dépôt: 17.02.2000
(51) Int. Cl.: C09K 9/02, G02B 1/10

(54) **PROCEDE DE PREPARATION D'UN LATEX A PROPRIETES PHOTOCHROMIQUES ET SES APPLICATIONS, EN PARTICULIER DANS LE DOMAINE OPHTALMIQUE**
VERFAHREN ZUR HERSTELLUNG VON EINEM PHOTOCHROMEN LATEX UND DESSEN VERWENDUNG, INSBESONDERE FÜR OPHTHALMISCHE ANWENDUNG
METHOD FOR PREPARING A LATEX WITH PHOTOCHROMIC PROPERTIES AND USES THEREOF, PARTICULARLY IN OPHTHALMOLOGY

(30) Priorité: 26.02.1999 FR 9902437
(43) Date de publication de la demande: 12.12.2001
(73) Titulaire: ESSILOR INTERNATIONAL COMPAGNIE GENERALE D'OPTIQUE, 94227 Charenton cédex (FR)
(72) Inventeur: MAISONNIER, Sylvette, F-95330 Domont (FR); TARDIEU, Pascale, F-75011 Paris (FR); CANO, Jean-Paul, F-94430 Chennevières-sur-Marne (FR); WAJS, Georges, F-94200 Ivry-sur-Seine (FR); VAIRON, Jean-Pierre, F-92340 Bourg-la-Reine (FR); CHARLEUX, Bernadette, F-94300 Vincennes (FR)
(74) Mandataire: Catherine, Alain
(86) Numéro de dépôt international: PCT/FR2000/000397
(87) Numéro de publication internationale: WO 2000/050533

(56) Documents cités:
- EP-A- 0 346 484
- EP-A- 0 873 881
- GB-A- 2 270 321
- RU-C- 2 095 836
- CHEMICAL ABSTRACTS, vol. 113, no. 4, 23 juillet 1990 (1990-07-23) Columbus, Ohio, US; abstract no. 25698, YAMAMOTO, KEIICHIRO ET AL: "Water-dispersible photochromic compound compositions for pens" XP002121209 & JP 02 020575 A (TORAY INDUSTRIES, INC., JAPAN) 24 janvier 1990 (1990-01-24)

## Description

L'invention a pour objet un procédé de préparation d'un latex photochromique, les films minces photochromiques obtenus à partir de ce dernier et les articles revêtus de tels films minces, en particulier des lentilles ophtalmiques photochromiques.

Le photochromisme est un phénomène connu depuis de nombreuses années. On dit qu'un composé est photochromique par exemple lorsque ce composé, irradié par un faisceau lumineux, dont certaines longueurs d'onde se situent dans le domaine de l'ultraviolet, change de couleur et revient à sa couleur originelle dès que l'irradiation cesse.

Les applications de ce phénomène sont multiples, mais une des applications connues plus particulièrement intéressante concerne le domaine de l'optique ophtalmique, dans la fabrication de lentilles ou verres pour lunettes, en vue de filtrer les radiations lumineuses en fonction de leur intensité.

L'incorporation de composés photochromiques dans un matériau organique constituant une lentille ophtalmique, permet d'obtenir un verre dont le poids est considérablement réduit par rapport aux lentilles classiques en verre minéral qui comportent des halogénures d'argent à titre d'agent photochromique.

Un procédé répandu pour la fabrication de lentilles ophtalmiques en matériau organique photochromique est le procédé dit de " transfert thermique " dans lequel des composés photochromiques, de nature organique, tels que des spirooxazines ou des chromènes, sont appliqués sur la lentille au moyen d'un support temporaire tel qu'un vernis, puis la lentille revêtue est chauffée afin de provoquer le transfert du composé photochromique du vernis sous la surface principale de la lentille. Ce procédé est décrit notamment dans les brevets US-A-4,286,957 et US-A-4,880,667.

Une autre technique dite de "moulage sur place ( cast in place )" consiste à incorporer les composés photochromiques organiques dans un mélange polymérisable conduisant à un matériau organique transparent, à introduire celui-ci dans un moule et à provoquer sa polymérisation.

Après démoulage, on obtient une lentille ophtalmique photochromique dont les pigments photochromiques sont incorporés dans l'ensemble de la masse de cette lentille.

Cette dernière technique présente deux inconvénients majeurs :
Elle nécessite des quantités importantes de pigments photochromiques qui sont des composés dont la synthèse est coûteuse.

Les amorceurs utilisés lors de la polymérisation dégradent les pigments photochromiques, ce qui est susceptible d'entraîner une diminution des performances photochromiques. Par ailleurs, la présence des produits de dégradation, généralement colorés, peut éventuellement altérer l'aspect de la lentille finale, la rendant alors inapte pour son application.

En outre, dans les deux techniques ci-dessus, les performances des pigments photochromiques dépendant étroitement du matériau dans lequel ils sont incorporés, il a fallu développer des matériaux organiques spécifiques propres à l'incorporation de tels pigments.

Or certains matériaux organiques utilisés dans l'optique ophtalmique tels que le polycarbonate (matériau thermoplastique généralement transformé par moulage par injection) présentent une matrice polymérique qui est peu favorable au photochromisme.

Une technique avantageuse et alternative aux techniques de transfert thermique ou de "moulage sur place" consiste à appliquer un revêtement photochromique sur une lentille ophtalmique préformée.

Il est ainsi possible de s'affranchir de la nature du matériau constituant la lentille ophtalmique sur laquelle le revêtement photochromique est appliqué.

Une telle technique est décrite dans son principe général, par exemple, dans le brevet EP-A-146136 et plus particulièrement, dans le cas de vernis polyuréthannes photochromiques, dans la demande de brevet WO 98/37115.

Il est donc souhaitable de fournir de nouveaux vernis photochromiques utilisables dans le domaine de l'optique ophtalmique qui présentent des propriétés améliorées, en particulier compte tenu des directives internationales visant à la réduction de solvants organiques

L'invention a pour objet un procédé de préparation d'un latex ayant des propriétés photochromiques, dont les propriétés n'évoluent pas ou peu au cours du temps, conduisant après séchage à des films minces photochromiques transparents, utilisables sur des lentilles ophtalmiques.

On a déjà décrit dans l'art antérieur des émulsions aqueuses renfermant un pigment photochromique.

Le brevet russe RU-2095836 décrit un procédé d'obtention de microcapsules photochromiques trouvant leur application essentielle en tant qu'agents d'authentification de documents officiels .

Selon le procédé décrit dans ce brevet, on dissout un composé photochromique, en l'occurrence le 6- nitro -1,3,3-triméthyl styrène (2H-1-benzopyranne)-2,2-indoline, dans un mélange de méthacrylates d'oligoesters polyfonctionnels (en l'occurrence un mélange de di(méth)acrylate d'éthylène glycol (DMEG) et de di(méth)acrylate de triéthylène glycol), en présence d'un amorceur peroxyde de benzoyle.

Le mélange est émulsifié dans une solution aqueuse renfermant un sel d'ammonium d'un copolymère d'acrylate de butyle et d'acide (méth)acrylique.

On introduit alors dans l'émulsion formée un mélange d'une résine mélamine-formaldéhyde-alcool polyvinylique puis on forme une enveloppe réticulée, tout en polymérisant simultanément le coeur des microcapsules.

Les microcapsules ainsi obtenues présentent un diamètre de 3 à 5µm, ce qui les rend inutilisables pour des dépôts de fines couches de 3 à 20µm.

Par ailleurs, la suspension de microcapsules obtenue présente une couleur résiduelle rose en l'absence d'irradiation, à l'état non excité, ce qui n'est pas souhaitable pour une application ophtalmique.

Le procédé de préparation d'un latex à propriétés photochromiques selon l'invention comporte les étapes suivantes :
(1) la préparation d'une émulsion aqueuse (I) d'une composition A comprenant :
   - au moins un monomère organique Z à groupements C=C, polymérisable par voie radicalaire, et
   - un ou plusieurs composé(s) photochromique(s) organique(s) comportant un noyau de formule : 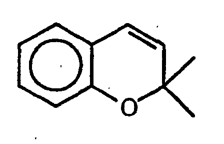
(2) la polymérisation en présence d'un amorceur soluble dans l'eau de la composition A de monomère(s) organique(s) afin d'obtenir ledit latex à propriétés photochromiques.

Les inventeurs ont constaté qu'en polymérisant en émulsion aqueuse, c'est à dire avec un amorceur soluble dans l'eau, le(s) monomère(s) Z et le composé photochromique tels que définis ci-dessus, on obtenait de manière surprenante un latex photochromique présentant les propriétés recherchées.

Comme cela est bien connu, les latex sont des dispersions stables d'un ou plusieurs polymères dans un milieu aqueux.

Sans vouloir donner d'interprétation limitative à l'invention, on peut penser que la présence de l'amorceur en solution aqueuse implique un contact réduit entre les radicaux créés en phase aqueuse et le composé photochromique présent dans la phase organique et que la dégradation éventuelle du composé photochromique s'en trouve particulièrement minimisée.

Les monomères Z à groupement C=C polymérisables recommandés sont des monomères de type (méth)acrylate d'alkyle, préférentiellement de type mono(méth)acrylate.

Les monomères Z préférés sont choisis parmi les (méth)acrylates d'alkyle en C₁-C₁₀ et préférentiellement les mélanges de monomères acrylate d'alkyle en C₂ - C₁₀ et de méthacrylate d'alkyle en C₁-C₃.

Par ailleurs, on a constaté que les performances des pigments photochromiques sont fortement améliorées lorsqu'ils sont incorporés dans des matrices de faible température de transition vitreuse.

Ainsi, d'une manière générale, il est souhaitable que le polymère final issu du séchage du latex obtenu selon le procédé de l'invention présente une température de transition vitreuse Tg inférieure ou égale à 0°C.

Ainsi donc, préférentiellement, au moins un monomère Z est susceptible de conduire, par homopolymérisation à un homopolymère possédant une Tg inférieure à 0°C, et de préférence inférieure à -20°C et mieux encore inférieure à -30°C. Ces monomères seront appelés dans la suite "monomères basse Tg".

Parmi les monomères basse Tg particulièrement recommandés, on peut citer l'acrylate de butyle (Tg homopolymère : -55°C), de propyle ou d'éthyle.

Il est généralement souhaitable d'utiliser un mélange de monomères Z constitué d'un monomère basse Tg défini ci-dessus et d'au moins un second monomère Z susceptible de conduire par homopolymérisation à un homopolymère de Tg plus élevée améliorant les propriétés mécaniques . Ces monomères seront appelés dans la suite "monomères haute Tg".

Comme monomère haute Tg, on peut citer le méthacrylate de méthyle (Tg homopolymère = 105°C)

Préférentiellement, le monomère basse Tg représente au moins 40%, de préférence au moins 50% en poids par rapport au poids total des monomères Z de la composition A.

Une composition A préférée renferme un mélange d'acrylate de propyle, de butyle, ou d'hexyle et de méthacrylate de méthyle, d'éthyle ou de propyle.

La composition A peut également comprendre un ou plusieurs agents réticulants, tels que par exemple, des di(méth)acrylate de poly(alkylène glycols). Parmi les agents réticulants préférés on peut citer le méthacrylate de glycidyle (GMA) qui conduit à une réticulation intraparticulaire,mais aussi interparticulaire (en présence de pipérazine) et le diméthacrylate de di(éthylèneglycol).

Ces agents réticulants peuvent représenter jusqu'à 10%, mais généralement représentent jusqu'à 5% en poids de la composition A.

La polymérisation en émulsion de la composition A conduit selon le cas à des particules d'homopolymères ou de copolymères statistiques.

L'invention comprend également dans sa portée le cas de latex à particules au moins biphasiques, en particulier comportant une structure de type coeur/écorce.

Une telle structure est obtenue en ajoutant au latex issu de la polymérisation au moins partielle de la composition A une seconde émulsion aqueuse (II) renfermant une composition B d'au moins un monomère organique polymérisable par voie radicalaire puis en polymérisant ladite composition B.

Les monomères de la composition B sont choisis de préférence parmi les mêmes familles de monomères que ceux utilisés dans la composition A.

Dans ce cas les monomères Z utilisés dans la composition B peuvent conduire à un homopolymère de Tg supérieure à 0°C, dans la mesure où les pigments photochromiques sont situés dans le coeur des particules.

L'écorce plus rigide permet d'augmenter les propriétés mécaniques des films obtenus ultérieurement.

Les composés photochromiques organiques utilisables dans le cadre de l'invention sont des composés photochromiques comportant un noyau de formule :

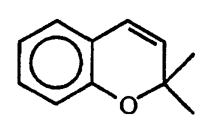

Préférentiellement, ces composés photochromiques ne comprennent pas de noyau indoline.

Les composés photochromiques sont préférentiellement des naphtopyrannes, en particulier ceux décrits dans les documents US-A-5,066,818, WO 93/17071, F-A-2688782.

Parmi les naphtopyrannes préférés, on peut citer les naphtopyrannes possédant deux groupements phényles substitués ou non sur le carbone en position adjacente à l'oxygène du noyau pyrannique.

On a constaté que de tels composés photochromiques présentent une excellente résistance vis à vis de la dégradation par des radicaux en milieu aqueux.

Le composé photochromique est introduit en quantité suffisante pour obtenir l'effet photochromique recherché dans les films finals.

Les concentrations en composé photochromique varient généralement de 2 à 5% en poids par rapport au poids des monomères polymérisables présent dans le latex .

Les amorceurs solubles dans l'eau utilisés pour la polymérisation des compositions de l'invention sont des sels et composés possédant au moins une fonction hydrophile .

Parmi ces sels et composés, on peut citer les persulfates des métaux alcalins et d'ammonium, en particulier le persulfate de sodium ou de potassium, l'eau oxygénée, et le dihydrochlorure de 2,2'-azobis(2-amidino propane).

On peut également utiliser des peroxydes partiellement hydrosolubles tels que le peracide succinique et l'hydroperoxyde de t-butyle.

On peut aussi employer des systèmes rédox tels que les persulfates associés à un ion ferreux .

On peut citer également l'hydroperoxyde de cumyle ou l'eau oxygénée, en présence d'ions ferreux, sulfite ou bisulfite.

Parmi tous ces amorceurs, les amorceurs préférés sont les persulfates des métaux alcalins.

On utilisera préférentiellement le persulfate de sodium ou de potassium, plutôt que le sel d'ammonium, susceptible de provoquer des variations de pH qui peuvent créer quelques produits colorés de dégradation du composé photochromique.

La quantité d'amorceur est variable et peut être adaptée selon le cas.

Généralement, la quantité d'amorceur varie de 0,1 à 1 % en poids par rapport au poids total des monomères polymérisables présents dans le latex.

Le latex est préparé en mélangeant le composé photochromique dans le ou les monomère(s) Z, généralement en milieu aqueux, de préférence en présence d'agents tensio-actifs, puis en provoquant la polymérisation au moyen de l'amorceur qu'on ajoute préférentiellement dans le mélange ci-dessus de façon progressive, en agitant vigoureusement.

Les agents tensio-actifs peuvent être des agents tensio-actifs ioniques tels que le dodécyl sulfate de sodium,le dodécylbenzène sulfate,le sulfonate de sodium ou les sulfates d'alcools gras éthoxylés,non ioniques tels que les alcools gras éthoxylés ou amphotères.On peut également utiliser un mélange d'agents tensio-actifs. Le système préféré est l'association d'agents tensio-actifs ioniques et non ioniques.

L'émulsion aqueuse de la composition peut encore comporter un agent tampon classique,et de ce fait le pH de l'émulsion reste constant (de préférence 5 à 7) pendant la préparation du latex.

Le temps de polymérisation varie généralement de 30 minutes à quelques heures.

Préférentiellement, l'amorceur et l'émulsion aqueuse sont chacun introduits progressivement dans le milieu réactionnel pendant la durée de l'étape de polymérisation.

Lors de la polymérisation, la température du mélange réactionnel est généralement comprise entre 50 et 90°C, température nécessaire pour l'activation de l'amorceur.

Préférentiellement encore, on introduit le mélange et l'amorceur de façon concomitante dans une solution aqueuse renfermant des tensio-actifs, solution appelée " pied de cuve ".

Les latex obtenus par le procédé de l'invention présentent un diamètre de particules compris entre 50 et 400nm, de préférence entre 80 et 300 nm et mieux encore entre 150 et 250nm.

L'extrait sec des latex représente généralement de 30 à 50% en poids de la masse totale du latex et préférentiellement de 40 à 50% en poids.

Une dilution est possible, par ajout d'eau si l'on souhaite diminuer l'extrait sec afin d'obtenir des vernis d'épaisseur plus faible.

Le pH des latex selon l'invention peut généralement varier de 5 à 7.

Les latex photochromiques selon l'invention peuvent être appliqués sur tout type de substrat par des techniques classiques connues de l'homme du métier, notamment :
par immersion dans le bain de latex photochromique (dip coating)
ou par application sur la surface du substrat suivie d'une centrifugation pour assurer une application uniforme des latex sur la surface.

Le film de latex est ensuite séché dans les conditions suivantes :
Température de séchage du film: Ambiante à 100°C;
Temps de séchage: 5 minutes à 1 heure.

Les épaisseurs des films obtenus sont fixées en fonction de l'importance de l'effet photochromique recherché.

Généralement, et compte tenu de la quantité de composé photochromique présent dans le latex, l'épaisseur varie de 3 à 20 µm et mieux de 5 à 15 µm.

Les substrats préférentiels sur lesquels sont appliqués les latex obtenus par le procédé de l'invention sont tous substrats en verre organique couramment utilisés pour les lentilles ophtalmiques organiques.

Les substrats en polycarbonate (thermoplastique), en particulier les lentilles ophtalmiques fabriquées par la société Gentex Optics, sont les substrats particulièrement recommandés sur lesquels sont appliqués les latex obtenus par le procédé de l'invention.

Parmi les autres substrats convenant, on peut citer des substrats obtenus par polymérisation des méthacrylates d'alkyle, en particulier des méthacrylates d'alkyle en C₁-C₄ tels que le méthyl(méth)acrylate et l'éthyl(méth)acrylate, les dérivés allyliques tels que les allyl carbonates de polyols aliphatiques ou aromatiques, linéaires ou ramifiés, les thio(méth)acryliques, les thiouréthannes, les (méth)acrylates aromatiques polyhéthoxylés tels que les bisphénolates diméthacrylates polyéthoxylés.

Parmi les substrats recommandés, on peut citer des substrats obtenus par polymérisation des allyl carbonates de polyols parmi lesquels on peut mentionner l'éthylèneglycol bis (allyl carbonate), le diéthylène glycol bis (2-méthyl carbonate), le diéthylèneglycol bis (allyl carbonate), l'éthylèneglycol bis (2-chloro allyl carbonate), le triéthylèneglycol bis (allyl carbonate), le 1,3-propanediol bis (allyl carbonate), le propylène glycol bis (2-éthyl allyl carbonate), le 1,3-butènediol bis (allyl carbonate), le 1,4-butènediol bis (2-bromo allyl carbonate), le dipropylèneglycol bis (allyl carbonate), le triméthylèneglycol bis (2-éthyl allyl carbonate), le pentaméthylèneglycol bis (allyl carbonate), l'isopropylène bisphénol-A bis (allyl carbonate).

Les substrats particulièrement recommandés sont les substrats obtenus par polymérisation du bis (allyl carbonate) du diéthylèneglycol, vendus sous la dénomination commerciale CR 39® par la société PPG INDUSTRIES (lentille ORMA®ESSILOR).

Parmi les substrats également recommandés, on peut citer les substrats obtenus par polymérisation des monomères thio(méth)acryliques, tels que ceux décrits dans la demande de brevet français FR-A-2 734 827.

Bien évidemment, les substrats peuvent être obtenus par polymérisation de mélanges des monomères ci-dessus.

Il est possible d'appliquer sur le film photochromique d'autres revêtements tels que des revêtements anti-abrasion et des revêtements anti-reflets.

Les revêtements durs anti-abrasion peuvent être tous revêtements anti-abrasion connus dans le domaine de l'optique ophtalmique.

Parmi les revêtements durs anti-abrasion recommandés dans la présente invention, on peut citer les revêtements obtenus à partir de compositions à base d'hydrolysat de silane, en particulier d'hydrolysat d'époxysilane, telles que celles décrites dans la demande de brevet français N° 93 026 49 et dans le brevet US -A-4,211,823.

Comme indiqué précédemment, la lentille ophtalmique selon l'invention peut comporter en outre un revêtement anti-reflets déposé sur le revêtement anti-abrasion.

A titre d'exemple, le revêtement anti-reflets peut être constitué d'un film mono- ou multicouche, de matériaux diélectriques tels que SiO, SiO₂, Si₃N₄, TiO₂, ZrO₂, Al₂O₃, MgF₂ ou Ta₂O₅, ou leurs mélanges.

Il devient ainsi possible d'empêcher l'apparition d'une réflexion à l'interface lentille-air.

Ce revêtement anti-reflets est appliqué généralement par dépôt sous vide selon l'une des techniques suivantes :
Par évaporation, éventuellement assistée par faisceau ionique.
Par pulvérisation par faisceau d'ion.
Par pulvérisation cathodique.
Par dépôt chimique en phase vapeur assistée par plasma.

Outre le dépôt sous vide, on peut aussi envisager un dépôt d'une couche minérale par voie sol/gel (par exemple à partir d'hydrolysat de tétraéthoxysilane).

Dans le cas où la pellicule comprend une seule couche, son épaisseur optique doit être égale à λ/4 (λ est une longueur d'onde comprise entre 450 et 650 nm).

Dans le cas d'un film multicouche comportant trois couches, on peut utiliser une combinaison correspondant à des épaisseurs optiques respectives λ/4, λ/2, λ/4 ou λ/4,λ/4,λ/4.

On peut en outre utiliser un film équivalent formé par plus de couches, à la place d'un nombre quelconque des couches faisant partie des trois couches précitées.

La présente invention concerne aussi des latex à propriétés photochromiques comprenant des particules de polymères comme définis ci-dessus qui renferment une quantité effective d'au moins un composé photochromique tel que défini précédemment.

Les exemples suivants illustrent la présente invention.

Dans les exemples, sauf indication contraire, tous les pourcentages et parties sont exprimés en poids.

### Préparation d'un latex acrylate de butyle (ABu)-méthacrylate de méthyle (MMA) statistique, à propriété photochromique.

### Préparation du pied de cuve

0,82 g de tensio-actif DISPONIL® A 3065 (mélange d'alcools gras à 30 EO, 65% de matières actives) et 0,55 g de tensio-actif DISPONIL® FES (C₁₂₋₁₄(OCH₂CH₂)₁₂ OSO⁻₃Na⁺) sont solubilisés dans 148,9 g d'eau. On agite le mélange pendant 10 minutes puis on l'introduit dans un réacteur à doubles parois dont le couvercle comporte 5 entrées (pour l'azote, le thermomètre, l'agitateur, la coulée de l'amorceur et la coulée de l' émulsion).

Le mélange est dégazé pendant 1 heure à 70°C.

### Préparation de l'émulsion I

De façon concomitante, on dissout 7,36 g de DISPONIL® A 3065 et 4,8 g de DISPONIL® FES dans 164,8 g d'eau tamponnée par ajout de 0,57 g de NaHCO₃. On agite la solution, puis, tout en maintenant l'agitation, on rajoute un mélange de 185,7 g d'acrylate de butyle et 79,6 g de méthacrylate de méthyle, mélange dans lequel on a précédemment incorporé 11,7 g d'un composé photochromique Pch : 8-méthoxy-3-(2-fluorophényl)-3-(4-methoxyphényl)-3H-naphto[2,1-b] pyranne dont la synthèse est décrite dans le document WO 93/17071. La quantité introduite correspond à 4,41 % en poids de composé Pch par rapport au poids des monomères ABu et MMA.

### Préparation de la solution d'amorçage

En parallèle on dissout 1,6 g de persulfate de sodium dans 12,4 g d'eau.

### Préparation du latex photochromique

On ajoute dans le réacteur par les entrées prévues à cet effet, en 4 heures et en parallèle, la émulsion I et la solution d'amorçage. (L'addition de la première goutte de persulfate de sodium indique le temps zéro de la réaction de polymérisation). La température de la réaction est de 70°C.

Le produit obtenu est un latex photochromique d'acrylate de butyle/méthacrylate de méthyle 70/30, statistique, selon l'invention ayant les caractéristiques suivantes:

| Extrait sec (%) | Taille de particules (nm) | pH |
|---|---|---|
| 42 | 180 | 7 |

### Préparation d'un second latex statistique,photochromique ABu(60)-MMA(40)

Le latex est préparé dans les mêmes conditions que ci-dessus excepté que les quantités de monomères utilisées sont :

| | |
|---|---|
| ABu | 161,9 g |
| MMA | 107,4 g |

La quantité introduite en composé photochromique Pch est de 4,34% par rapport au poids des monomères ABu et MMA.

Le produit obtenu est un latex photochromique d'acrylate de butyle/méthacrylate de méthyle 60/40,statistique,ayant les caractéristiques suivantes:

| Extrait sec (%) | Taille de particules (nm) | pH |
|---|---|---|
| 43 | 190 | 7 |

### Préparation d'un latex de structure coeur/écorce ABu/MMA 70/30

Le coeur du latex a été préparé dans un premier temps en coulant en 2h48 l'émulsion I, puis dans un second temps, l'écorce en coulant en 1h12 l'émulsion II.

La solution d'amorçage est coulée en parallèle dans le mélange réactionnel, pendant une durée de 4 heures à partir de l'ajout de la première goutte d'émulsion I.

Les compositions du pied de cuve, des émulsions I et II et de la solution d'amorçage sont indiquées dans le tableau ci-dessous:

| | Pied de cuve | émulsion I | émulsion II | Amorçage |
|---|---|---|---|---|
| Eau (g) | 148,9 | 115,4 | 49,4 | 12,4 |
| DISP.3065 (g)(2% poids/M) | 0,82 | 5,15 | 2,21 | |
| DISP.FES (g)(2% | 0,55 | 3,36 | 1,44 | |
| NaHCO3 (g) | | 0,4 | 0,17 | |
| ABu (g) | | 185,7 | | |
| MMA (g) | | | 79,6 | |
| Persulfate de sodium (g) | | | | 1,6 |
| Pch (4,41% en poids/M) | | 11,7 | | |

Le produit obtenu est un latex photochromique d'acrylate de butyle/méthacrylate de méthyle 70/30, coeur/noyau, selon l'invention ayant les caractéristiques suivantes:

| Extrait sec (%) | Taille de particules (nm) | pH |
|---|---|---|
| 44 | 210 | 7 |

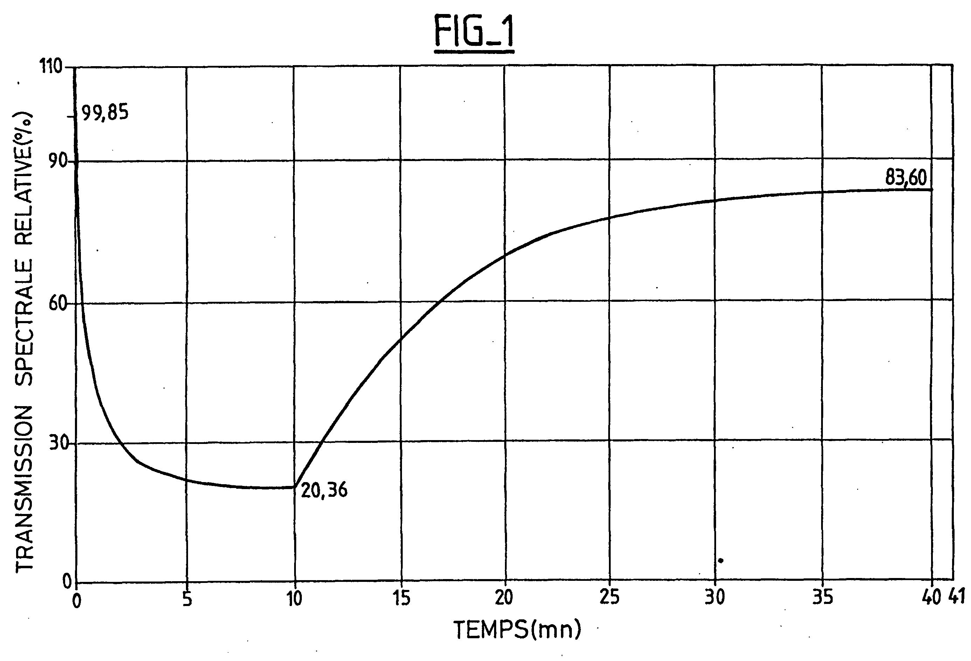

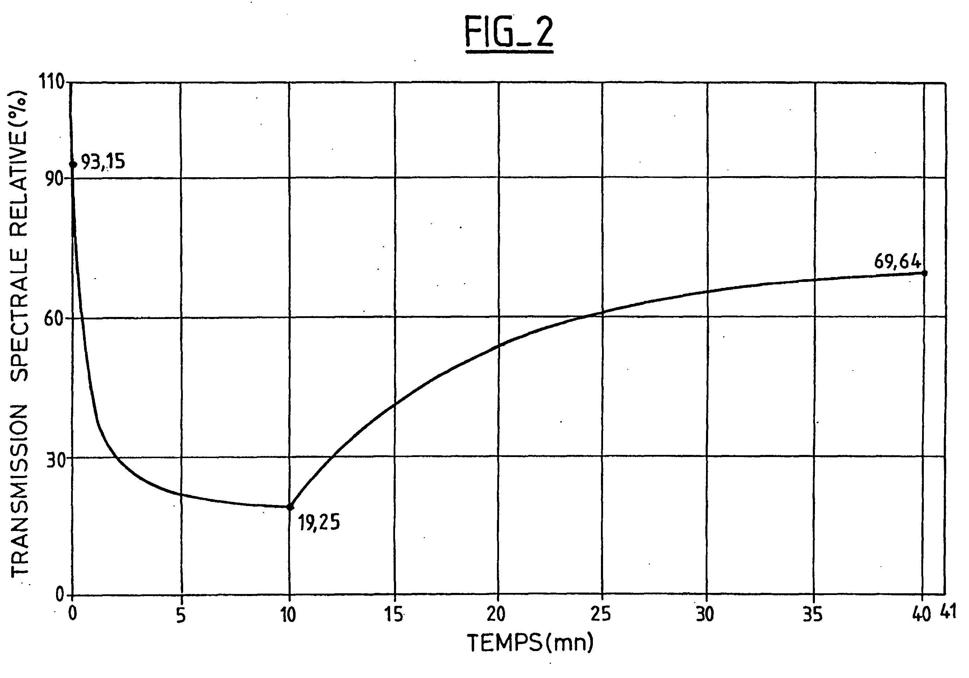

Les performances des composés photochromiques déposés en film apparaissent dans les figures 1 et 2 en annexe (Transmission spectrale relative en fonction du temps).

(Latex statistique ABu(70)/MMA(30) (fig.1), et latex coeur/écorce décrit ci-dessus (fig.2)).

Les films de latex étaient déposés sur des verres ORMA® plan par centrifugation à des épaisseurs 6 µm.

Les propriétés spectro-cinétiques des films ont été mesurées dans les conditions suivantes:
Température:20°C (Régulation par air)
Pas d'éclairement visible
Eclairement UV:10,2W/m2
10 minutes coloration par irradiation UV définie ci-dessus / 30 minutes de décoloration, après arrêt de l'irradiation UV.

## Revendications

1. Procédé de préparation d'un latex à propriétés photochromiques comportant les étapes suivantes
(1) la préparation d'une émulsion aqueuse I d'une composition A comprenant :
au moins un monomère organique Z à groupement C=C, polymérisable par voie radicalaire, et
un ou plusieurs composé(s) photochromique(s) organique(s) comportant un noyau de formule : 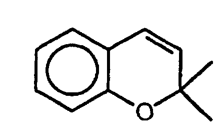
(2) la polymérisation en présence d'un amorceur soluble dans l'eau de la composition A de monomère(s) organique(s) afin d'obtenir le dit latex à propriétés photochromiques.

2. Procédé selon la revendication 1,**caractérisé par le fait que** la polymérisation de la composition A est au moins partielle et on ajoute au latex issu de cette polymérisation au moins partielle de la composition A une seconde émulsion aqueuse II renfermant une composition B d'au moins un monomère organique polymérisable par voie radicalaire, puis l'on polymérise la dite composition B afin d'obtenir un latex de particules photochromiques au moins ebiphasiques.

3. Procédé selon la revendication 1 ou 2,**caractérisé par le fait que** le latex biphasique possède une structure coeur/écorce.

4. Procédé selon l'une quelconque des revendications précédentes,**caractérisé par le fait que** l'amorceur soluble dans l'eau est introduit de façon progressive dans l'émulsion aqueuse I, pendant la durée de l'étape de polymérisation (2) .

5. Procédé selon l'une quelconque des revendications précédentes,**caractérisé par le fait que** l'amorceur soluble dans l'eau et l'émulsion aqueuse I sont chacun introduits progressivement dans le milieu réactionnel pendant la durée de l'étape de polymérisation (2).

6. Procédé selon l'une quelconque des revendications précédentes,**caractérisé par le fait que** l'amorceur soluble dans l'eau est choisi parmi les persulfates alcalins et d'ammonium, préférentiellement le persulfate de potassium ou de sodium.

7. Procédé selon l'une quelconque des revendications précédentes,**caractérisé par le fait que** le pourcentage en poids de l'amorceur par rapport au(x) monomère(s) organiques(s) polymérisables par voie radicalaire utilisés pour la préparation du latex à propriétés photochromiques est compris entre 0,1 et 1%.

8. Procédé selon l'une quelconque des revendications précédentes,**caractérisé par le fait que** l'un au moins des monomères Z est un monomère basse Tg qui conduit à un homopolymère dont la température de transition vitreuse Tg est inférieure ou égale à O°C.

9. Procédé selon l'une quelconque des revendications précédentes, **caractérisé par le fait que** le monomère organique Z est un monomère (méth)acrylate d'alkyle.

10. Procédé selon l'une quelconque des revendications précédentes,**caractérisé par le fait que** le monomère basse Tg représente au moins 40% en poids des monomères polymérisables par voie radicalaire.

11. Procédé selon l'une quelconque des revendications précédentes,**caractérisé par le fait que** les particules du latex à propriétés photochromiques obtenu présentent un diamètre de 50 à 400 nm.

12. Procédé selon l'une quelconque des revendications précédentes,**caractérisé par le fait que** l'extrait sec du latex représente de 30 à 50% du poids total du latex.

13. Procédé selon l'une quelconque des revendications précédentes,**caractérisé par le fait que** le pH du latex est compris entre 5 et 7.

14. Latex à propriétés photochromiques, **caractérisé par le fait qu'**il comprend des particules d'un matériau polymère résultant de la polymérisation par voie radicalaire d'au moins un monomère organique Z à groupement C=C renfermant un ou plusieurs composé(s) photochromique(s) organique(s) comportant un noyau de formule: 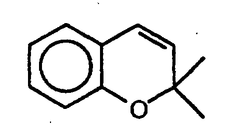 les particules de matériau polymère ayant une taille de 50 à 400 nm,de préférence de 80 à 300 nm et mieux de 150 à 250nm.

15. Latex selon la revendication 14,**caractérisé par le fait que** le ou les composé(s) photochromique(s) organique(s) ne comportent pas de noyau indoline.

16. Latex selon la revendication 14 ou15,**caractérisé par le fait que** les particules de matériau polymère ont une structure biphasique, de préférence de type coeur/écorce.

17. Latex selon la revendication 16,**caractérisé par le fait que** le ou les composé(s) photochromique(s) organique(s) sont contenus dans le coeur des particules.

18. Latex selon l'une quelconque des revendications 14 à 17 ,**caractérisé par le fait que** l'extrait sec du latex représente 30 à 50% du poids total du latex.

19. Substrat revêtu d'un film obtenu par séchage du latex selon l'une quelconque des revendications 14 à 18.

20. Substrat selon la revendication 19,**caractérisé par le fait que** le film a une épaisseur de 3 à 20 µm.

21. Substrat selon l'une quelconque des revendications 20 à 21 ,**caractérisé par le fait qu'**un revêtement anti-abrasion est appliqué sur le le film séché de latex.

22. Substrat selon la revendication 22, **caractérisé par le fait qu'**un revêtement anti-reflet est appliqué sur le revêtement anti-abrasion.

23. Substrat selon l'une quelconque des revendications 20 à 23, **caractérisé par le fait qu'**il constitue une lentille ophtalmique.

## Claims

1. Method for preparing a latex with photochromic properties comprising the following steps :
(1) preparing an aqueous emulsion (I) of a composition A comprising :
at least one organic monomer Z with a C=C group, capable of radical polymerization, and
- one or more organic photochromic compounds containing a ring of formula : 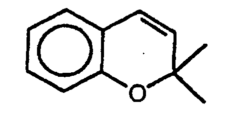
(2) polymerizing composition A of organic monomers in the presence of a water-soluble initiator to obtain said latex with photochromic properties.

2. Method according to claim 1, **characterized in that** the polymerization of composition A is at least partial and to the latex produced by this at least partial polymerization of composition A is added a second aqueous emulsion (II) containing a composition B of at least one organic monomer capable of radical polymerization, then said composition B is polymerized so as to obtain a latex of at least biphasic photochromic particles.

3. Method according to claim 1 or 2, **characterized in that** the biphasic latex has a core/skin structure.

4. Method according to any one of the preceding claims, **characterized in that** the water-soluble initiator is introduced progressively into the aqueous emulsion I, throughout the polymerization step (2).

5. Method according to any one of the preceding claims, **characterized in that** the water-soluble initiator and the aqueous emulsion (I) are each introduced progressively into the reaction medium throughout the polymerization step (2).

6. Method according to any one of the preceding claims, **characterized in that** the water-soluble initiator is selected from the alkali and ammonium persulfates, and preferably potassium or sodium persulfate.

7. Method according to any one of the preceding claims, **characterized in that** the percentage by initiator based on the organic monomer or monomers capable of radical polymerization used for the preparation of the latex with photochromic properties is between 0.1 and 1%.

8. Method according to any one of the preceding claims, **characterized in that** at least one of the monomers Z is a low Tg monomer which leads to a homopolymer whose glass transition temperature Tg is less than or equal to 0°C.

9. Method according to any one of the preceding claims, **characterized in that** the organic monomer Z is an alkyl (meth)acrylate monomer.

10. Method according to any one of the preceding claims, **characterized in that** the low Tg monomer represents at least 40% by weight of the monomers capable of radical polymerization.

11. Method according to any one of the preceding claims, **characterized in that** the particles of the latex with photochromic properties have a diameter of 50 to 400 nm.

12. Method according to any one of the preceding claims, **characterized in that** the dry extract of the latex represents from 30 to 50% of the total weight of the latex.

13. Method according to any one of the preceding claims, **characterized in that** the pH of the latex is between 5 and 7.

14. Latex with photochromic properties, **characterized in that** it comprises particles of a polymer material resulting from the radical polymerization of at least one organic monomer Z with a C=C group containing one or more organic photochromic compounds containing a ring of formula : 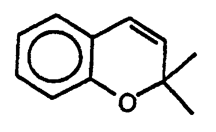 the particles of said polymer material having a size of between 50 and 400 nm, preferably between 80 and 300 nm and more particularly between 150 and 250 nm.

15. Latex according to claim 14, **characterized in that** the organic photochromic compound or compounds do not contain an indoline ring.

16. Latex according to claim 14 or 15, **characterized in that** the particles of polymer material have a biphasic structure, preferably of the core/skin type.

17. Latex according to claim 16, **characterized in that** the organic photochromic compound or compounds are contained in the core of the particles.

18. Latex according to any one of claims 14 to 17, **characterized in that** the dry extract of the latex represents from 30 to 50% of the total weight of the latex.

19. Substrate coated with a film obtained by drying of the latex according to any one of claims 14 to 18.

20. Substrate according to claim 19, **characterized in that** the film has a thickness of between 3 and 20 µm.

21. Substrate according to any one of claims 19 or 20, **characterized in that** an anti-abrasion coating is applied onto the dried latex film.

22. Substrate according to claim 21, **characterized in that** an antireflection coating is applied onto the anti-abrasion coating.

23. Substrate according to any one of claims 20 to 22, **characterized in that** it constitutes an ophthalmic lens.

## Patentansprüche

1. Verfahren zur Darstellung eines Latex mit photochromatischen Eigenschaften, umfassend die folgenden Schritte:
(1) Darstellen einer wässrigen Emulsion I mit einer Zusammensetzung A, umfassend:
Zumindest ein organisches Monomer Z mit mittels Radikalbildung polymerisierbaren C=C-Gruppierungen, und
Eine oder mehrere organische photochromatische Verbindungen, umfassend einen Kern mit der Gleichung: 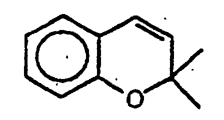
(2) Polymerisieren im Beisein eines Initiators, der in dem Wasser der organischen Monomerzusammensetzung A löslich ist, um das Latex mit photochromatischen Eigenschaften zu erhalten.

2. Verfahren nach Anspruch 1, **dadurch gekennzeichnet, daß** die Polymerisation der Zusammensetzung A zumindest teilweise erfolgt, wobei man diesem aus der zumindest teilweisen Polymerisation der Zusammensetzung A resultierenden Latex eine zweite wässrige Emulsion II zufügt, eine Zusammensetzung B einschließend aus zumindest einem mittels Radikalbildung polymerisverbaren organischen Monomer, wonach man die Zusammensetzung B polymerisiert, um ein Latex mit zumindest ebiphasischen photochromatischen Partikeln zu erhalten.

3. Verfahren nach Anspruch 1 oder 2, **dadurch gekennzeichnet, daß** das biphasische Latex eine Kern- Struktur aufweist.

4. Verfahren nach einem der vorangegangenen Ansprüche, **dadurch gekennzeichnet, daß** der wasserlösliche Inititator in progressiver Weise in die wässrige Emulsion I eingeführt wird, und zwar während der Dauer des Polymerisationsschrittes (2).

5. Verfahren nach einem der vorangegangenen Ansprüche, **dadurch gekennzeichnet, daß** der wasserlösliche Initiator und die wässrige Emulsion I jeweils progressiv eingeführt werden in das reaktive Milieu während der Dauer des Polymerisationsschrittes (2).

6. Verfahren nach einem der vorangegangenen Ansprüche, **dadurch gekennzeichnet, daß** der wasserlösliche Initiator ausgewählt ist unter Alkali- und Ammoniumpersulfaten, bevorzugt Natrium- oder Kaliumpersulfat.

7. Verfahren nach einem der vorangegangenen Ansprüche, **dadurch gekennzeichnet, daß** der Gewichtsprozentsatz des Initiators mit Bezug auf das oder die mittels Radikalbildung polymerisierbaren organischen Monomere, verwendet zur Darstellung des Latex mit photochrormatischen Eigenschaften, enthalten ist zwischen 0,1 und 1 Prozent.

8. Verfahren nach einem der vorangegangenen Ansprüche, **dadurch gekennzeichnet, daß** zumindest eines der Monomere Z ein Nieder-Tg-Monomer ist, zu einem Homopolymer führend, dessen Glasübergangstemperatur Tg kleiner oder gleich zu 0°C ist.

9. Verfahren nach einem der vorangegangenen Ansprüche, **dadurch gekennzeichnet, daß** das organische Monomer Z ein Alkyl(meth)acrylatmonomer ist.

10. Verfahren nach einem der vorangegangenen Ansprüche, **dadurch gekennzeichnet, daß** daß das Nieder-Tg-Monomer zumindest 40 Gewichtsprozent der mittels Radikalbildung polymerisierbaren Monomere darstellt.

11. Verfahren nach einem der vorangegangenen Ansprüche, **dadurch gekennzeichnet, daß** die Latexpartikel mit photochromatischen Eigenschaften, die erhalten sind, einen Durchmesser von 50 bis 400 nm aufweisen.

12. Verfahren nach einem der vorangegangenen Ansprüche, **dadurch gekennzeichnet, daß** das Trockenextrakt des Latex 30 - 50 Prozent des Gesamtgewichtes des Latex darstellt.

13. Verfahren nach einem der vorangegangenen Ansprüche, **dadurch gekennzeichnet, daß** der pH-Wert des Latex enthalten ist zwischen 5 und 7.

14. Latex mit photochromatischen Eigenschaften, **dadurch gekennzeichnet, daß** es Partikel umfaßt aus einem Polymermaterial, resultierend aus der Polymerisation mittels Radikalbildung von zumindest einem organischen Monomer Z mit C=C-Gruppierungen, eine oder mehrere organische photochrormatische Verbindungen einschließend, umfassend einen Kern mit der Gleichung: 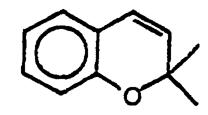 wobei die Polymermaterialpartikel eine Größe aufweisen von 50 bis 400 nm bevorzugt von 80 bis 300 nm und insbesondere bevorzugt von 150 bis 250 Nanometer.

15. Latex nach Anspruch 14, **dadurch gekennzeichnet, daß** die organische(n) photochromatische(n) Verbindung(en) keinen Indol- Kern umfaßt bzw. umfassen.

16. Latex nach Anspruch 14 oder 15, **dadurch gekennzeichnet, daß** die Polymermaterialpartikel eine biphasische Struktur aufweisen, bevorzugt vom Typ Kern-Hülle.

17. Latex nach Anspruch 16, **dadurch gekennzeichnet, daß** die organische(n) photochromatische(n) Zusammensetzung(en) in dem Kern der Partikel enthalten ist bzw. sind.

18. Latex nach einem der Ansprüche 14 - 17, **dadurch gekennzeichnet, daß** das Trokkenextrakt des Latex 30 bis 50 Prozent des Latex darstellt.

19. Substrat, welches mit einem Film beschichtet ist, enthalten durch Trocknung des Latex nach einem der Ansprüche 14 - 18.

20. Substrat nach Anspruch 19, **dadurch gekennzeichnet, daß** der Film eine Dicke von 3 - 20 mm aufweist.

21. Substrat nach einem der Ansprüche 20 - 21, **dadurch gekennzeichnet, daß** eine antiabrasive Beschichtung an dem getrockneten Latexfilm aufgebracht ist bzw. wird.

22. Substrat nach Anspruch 22, **dadurch gekennzeichnet, daß** eine Antireflexbeschichtung auf die antiabrasive Beschichtung aufgebracht ist bzw. wird.

23. Substrat nach einem der Ansprüche 20 - 23, **dadurch gekennzeichnet, daß** es eine ophtalmische Linse bildet oder darstellt.
